Europäisches Patentamt

European Patent Office

Office européen des brevets

(11) Publication number: **0 197 676**
**A1**

## (12) EUROPEAN PATENT APPLICATION

(21) Application number: 86301880.0

(51) Int. Cl.⁴: **B60T 7/12** , B60R 19/02

(22) Date of filing: **14.03.86**

(30) Priority: **21.03.85 GB 8507380**

(43) Date of publication of application:
**15.10.86 Bulletin 86/42**

(84) Designated Contracting States:
**AT BE CH DE FR GB IT LI LU NL SE**

(71) Applicant: **AVON TYRES LIMITED**
**Bath Road**
**Melksham Wiltshire SN12 8AA(GB)**

(72) Inventor: **Wells, William Neil**
**16 Pennine Close**
**Melksham Wiltshire, SN12 7RX(GB)**

(74) Representative: **Harrison, David Christopher**
**et al**
**MEWBURN ELLIS & CO 2/3 Cursitor Street**
**London EC4A 1BQ(GB)**

(54) Sensor.

(57) A pneumatic sensor especially but not exclusively for a safety device for braking reversing vehicles is an extruded strip of elastomer having a base (3) for securing directly or indirectly to the rear of the vehicle, a comparatively rigid nose part (6) and an apertured part (4) between them. The ends of the strip are sealed. The apertured part (4) is comparatively flexible, having weakenings (8) to make it so. Deflection of the nose (6) on hitting an obstacle tends to cause contraction of the volume entrapped in the apertures, hence a tendency to pressure rise, which actuates the braking system of the vehicle.

Fig.1.

# SENSOR

There have recently been developed devices for controlling a vehicle in motion so that if it touches some obstacles the brakes are automatically applied. Interlocks may be provided so that it cannot start its motion again until the area of contact has been inspected and it has been made sure that the obstacle has been removed. An example of such a device and system, specifically for use in controlling the lorry during reversing, is in GB-A-2027828. The sensors there used are mechanical and rely on mechanical displacement of a pivoting arm.

The present invention provides an alternative form of sensor which is considerably simpler and has many advantages.

The sensor provided according to this invention usable on any vehicle, front, side or rear, is a resilient strip which is (except in its termination at each end) of one piece integral cross section and of constant cross section along its length. It has a portion designed to maintain impact with an obstacle but which is itself comparatively rigid but which is readily movable in relation to the rest of the strip so that the obstacle (which might be a human being) will not be damaged unduly by the impact, and a portion which is to detect the fractional movement of the rigid portion and cause it to be signalled to the brake control.

The problems to be faced are not only those of reliability of manufacture and avoidance of damage to the object impacted but also those of having a strip which can be fitted to as many as possible conformations and designs of vehicle; preferably therefore it will be fittable on a generally vertical surface of a vehicle without reference to the vertical extent of that surface. It is preferred therefore that the back face of the sensor stript (that which is towards the front of the vehicle) is attachable to a planar surface.

The preferred transmission of a sensor impact is (as far as the sensor stript is concerned) preferably purely pneumatic that is to say squeezing or other contraction of a tubular part of the strip causes pneumatic actuation of an element outside the strip. This element may be a pressure sensitive electrical switch which controls the brake circuitry or may be directly a pneumatic valve in the brake circuitry.

A further problem to be overcome in this connection is that of presenting the sensor at a position where it will usefully detect impact i.e. where it is substantially at or projecting beyond the outermost line of the vehicle when in use but will no hinder access to the vehicle and in particular wi not hinder a drop gate of the vehicle when it i: fitted to the rear or side of a vehicle.

In one form of sensor therefore we can provide an extensible and retractable formation by provid ing at the base part of the sensor strip an air bag with concertina wall. On inflation of the air bag (which may be automatic upon engagement of the reverse gear) the sensor borne by the air bag i: carried rearwardly to extend beyond the back o the vehicle but upon deflation of the bag it i brought forward. The air bag may be integrall formed with the rest of the strip or may be separate element attached to it.

Embodiments of the invention will now be de scribed with reference to the accompanying draw ings wherein:

Figures 1, 2, 3 and 4 are cross section: through respective sensor strip embodiments, Figure 5 shows a cross section through a extensible embodiment,
Figure 6 a and b show a second extensibl embodiment,
Figure 7 is a plan view of a further embodi ment, and
Figure 8 is a section on the line VIII-VIII c Figure 7.

A sensor strip is to be attached to a part of vehicle, in particular to the rear of a heavy good vehicle where rearward viewing behind the body c the vehicle is difficult. The sensor to detect impac during movement should extend over the whole c the width of the vehicle and maybe even beyon that width. In the present embodiment it is a on piece integrally formed strip with the exception c its extreme end portions which may be separat parts acting as end caps or plugs and attached t it. In all cases the strip has a nose for detectin impact which has its own slight but not excessiv flexibility and a portion of much greater flexibilit which upon deflection of the nose part actuates sensor proper, in all the embodiments by pneu matic action due to contraction of its volume.

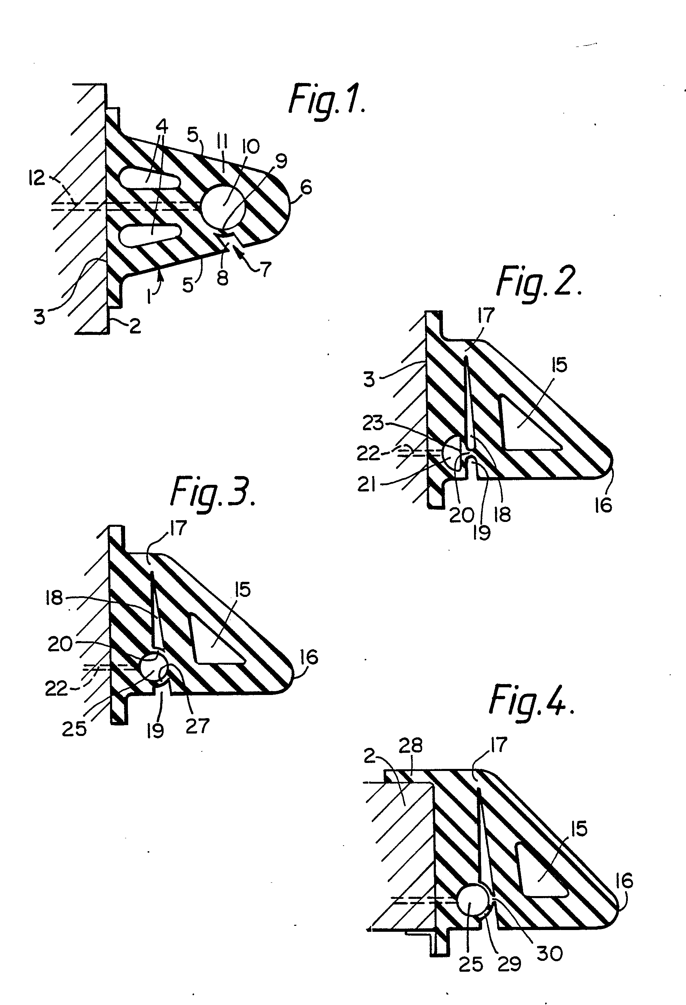

In the embodiment of Figure 1, the strip 1 i seen mounted on a underride bar of a vehicl facing backwards in relation to the vehicle. Sinc the base 3 of the strip and the underride bar ar planar the strip can be secured (by bolts or screw: not shown) or by bonding to part of the vertic extent of the underride bar, irrespective of th relationship between its vertical height and that c the base 3.

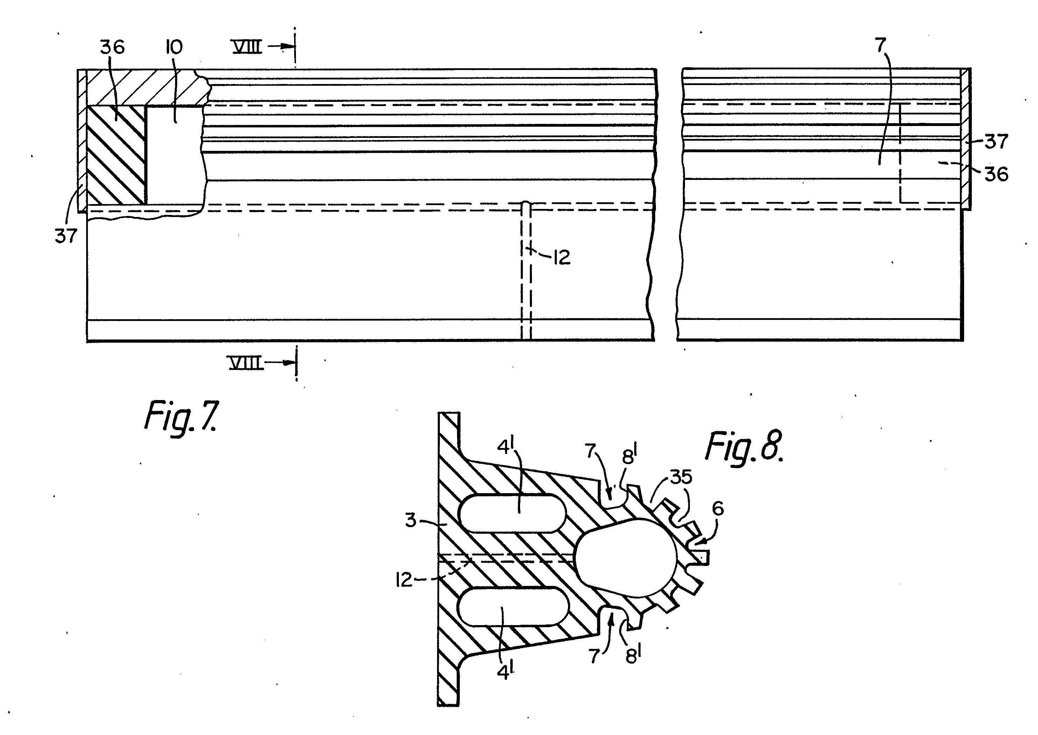

The strip is a continuous constant section extrusion which has, extending from the base, an apertured structure 4 between tapered side walls 5 leading to a nose part 6. The material of the extrusion is a suitable elastomer such as rubber. It has on the whole a certain flexibility due to the apertured structure and the nature of its material such that impact with an object onto an object by the nose will not unduly damage that object. More importantly the sensor strip has a portion 7 of increased flexibility. In the present embodiment this is due to a groove 8 cut into one of the side walls (in manufacture cutting may be essential if extrusion cannot sufficiently form a groove) to leave a thin flexible diaphragm 9 of material between it and an aperture 10. Due to the nature of the material the whole of the nose part is additionally flexible about a hinge line generally indicated at 11. This will cause contraction of the volume of the aperture 10 (which forms a tube along the length of the strip). It is closed at each end by suitable end caps or end mouldings (see also Figure 7) so that the contraction of volume tends to cause an increase of pressure in the tube. This is detected through a bore 12 which is coupled to the brake control system of the lorry either pneumatically through a pilot valve or electrically through a pressure sensitive switch.

As can be seen in Figure 2 the base 3 is as before but in this case tapering is through a hollow triangular section part 15 to a nose 16. The whole of this portion pivotting about a hinge line 17 upon deflection due to the presence of a wedge shaped aperture 18 and notch 19 below hinge line 17 and between the nose portion and the essentially solid base portion. However this aperture notch is separated by a neck 20 and in the base part there is formed an aperture (tube) 21, to which a bore 22 is taken. It can be seen that deflection of the nose 16 causes pressure on the comparatively thin wall 23 of the aperture 21 exerted through the neck 20 of material. Hence contraction on the volume of the tube formed by the aperture will end in communication of increased air pressure through the bore 22.

A further embodiment seen in Figure 3 is similar to that of Figure 2 having a nose 16 and a triangular void and hinge line 17 above wedge aperture 18 and notch 19, but the aperture or tube 25 is in this case defined not only by the material of the base portion but also by two thin deflectable walls 26,27 as diaphragms bridging the aperture and gap. Once again a bore 22 communicates from the tube air pressure increased due to deflection of the nose.

Figure 4 shows another embodiment which in this case has an overhanging lug part 28 over the tope of an underride bar 2 and so is less preferred from the point of view of adaptability since it cannot be fitted to underride bars of more than a certain vertical extent. Otherwise, its operation is very similar to the embodiment of Figure 3, a slight modification being shown in that the tube 25 is defined by a complete wall 29 which is joined to the nose portion by a narrow neck 30. In a sense this embodiment is intermediate between the embodiments of Figures 2 and 3.

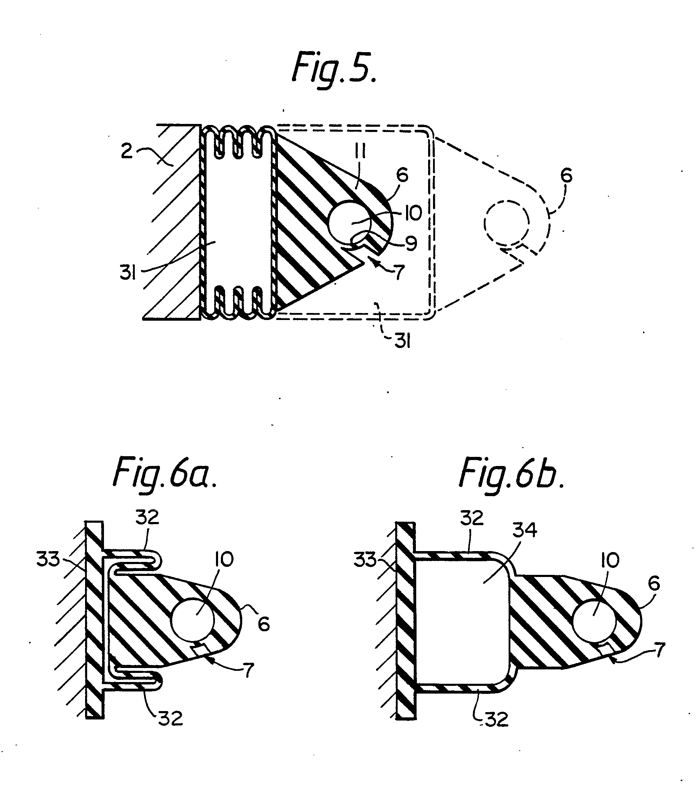

In Figure 5 there is shown a first extensible embodiment. Its nose, tube and deflectability are identical to the embodiment of Figure 1, but in order to allow it to be moved from a retracted position shown in full lines to one shown in dotted lines, its base is mounted not directly on an underride bar 2, but through the intermediary of a concertina airbag 31 which when inflated even by air of comparatively low pressure such as 5 psi, straightens out to bring the nose to the projecting position seen in dotted lines. Clearly the pressure under which the bag is held extended will have to be greater than that at which the sensor tube 10 is contracted by an object impinging on the nose 6 and furthermore some specific duct will have to be provided to communicate air pressure, raised by deflection of the nose, from the tube 10 to the body of the vehicle through the air bag. Alternatively an air pressure actuated switch may be mounted on the strip or air bag itself.

A second extensible embodiment where an extending air bag is integral with the strip is seen in Figures 6a and 6b. The sensing part of the strip is as described with reference to Figure 1, but this is formed as an integral extrusion with floppy parallel legs 32 which extend between the sensor part of the strip and a base 33 which is for mounting on a vertical surface of the lorry. Again, the injection of air under pressure into the bag 34 formed by the walls 32, base 33 and strip, causes the latter to be pushed into a projecting condition seen in Figure 6b where it is available for contact with objects behind the lorry.

Figures 7 and 8 show a final embodiment but Figure 7, in showing how end plugs 36 and end caps 37 are fitted to seal the ends of a sensor strip of any desired length, is applicable to all the previously disclosed embodiments.

In this final embodiment the nose part 6 is modified by the provision of grooves 35 along it so that contact with an obstruction is made by ridges between the grooves. This embodiment is symmetrical, in that two grooves 8' are opposed across the tube 10 to provide two flexible areas 7 (and grooves 35, through to a more limited extent, may also contribute flexibility) so the tube 10 may be contracted by a straight squeeze of the tube or by pivoting about either of the weakened portions at the bases of the grooves 8'. This profile is particularly suitable for manufacture by an extrusion process.

**Claims**

1. A sensor for detecting contact with an obstacle and actuating a vehicle braking system characterised in that the sensor is a strip of constant cross section along its length and having a base - (3) for mounting to the vehicle, a nose part (6,16) and an apertured portion (4) between the base (3) and the nose part (6,16), the apertured portion being flexible whereby deflection of the nose part - (6,16) relative to the base is possible to cause an alteration in volume of a tube (10,21,25) formed by the apertured portion and thereby generate a signal to actuate the vehicle braking system.

2. A sensor according to claim 1 wherein the apertured portion comprises at lease one weakening (8,8',19) to assist the flexibility of the portion - (4).

3. A sensor according to claim 2 wherein the weakening is directly opposed across the tube (10,28,25) to a portion forming a line of pivot (11,17) for the nose part (6,16) relative to the base (13).

4. A sensor according to any one of the preceding claims wherein the tube (21, 25) is at least partly defined by a diaphragm wall (23,26,27,29).

5. A sensor according to any one of the preceding claims wherein the base (3) is formed integrally with or is attached to an expansible and collapsible air bag (31,34) through which it is to be mounted on the vehicle to be projectable from or retractable towards the vehicle according to the condition of the air bag (31,34).

6. A vehicle braking control system comprising a sensor according to any one of the preceding claims and adapted to be acuated by change of air pressure in the tube (10,21,25).

7. A vehicle braking control system according to claim 6 wherein the air pressure is to act pneumatically on a control valve in the braking system.

8. A vehicle braking control system according to claim 6 wherein the air pressure is to act pneumatically on an electrical switch for controlling the braking system.

0 197 676

Fig.1.

Fig.2.

Fig.3.

Fig.4.

# Fig.5.

# Fig.6a.

# Fig.6b.

Fig.7.

Fig.8.

0 197 676

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 041 606  (LEONARD) <br> * Page 1, line 101 - page 2, line 16; figures 1-3 * | 1,6 | B 60 T    7/12 <br> B 60 R   19/02 |
| Y | DE-A-2 513 880  (EBESSON) <br> * Page 3, line 1 - page 4, line 24; figures 1-3 * | 1,6 | |
| A | | 8 | |
| A | GB-A-  836 126  (SANDALL) <br><br> * Page 1, line 69 - page 3, line 40; figures 1-3 * | 1,4,5, 6 | |
| A | GB-A-2 118 753  (OGDEN) | | TECHNICAL FIELDS SEARCHED (Int. Cl.4) |
| A,D | GB-A-2 027 828  (FISHER) | | B 60 T    7/12 <br> B 60 T    7/16 <br> B 60 T    7/18 <br> B 60 R   19/02 |
| A,P | EP-A-0 148 585  (FISHER) | | |

The present search report has been drawn up for all claims

| Place of search | Date of completion of the search | Examiner |
|---|---|---|
| THE HAGUE | 27-06-1986 | HARTEVELD C.D.H. |